Europäisches Patentamt

European Patent Office

Office européen des brevets

(11) Veröffentlichungsnummer: **0 141 974**
**A2**

(19)

## (12) EUROPÄISCHE PATENTANMELDUNG

(21) Anmeldenummer: **84111147.9**

(22) Anmeldetag: **19.09.84**

(51) Int. Cl.⁴: **A 01 D 34/66, A 01 B 39/08**

(30) Priorität: **12.11.83 DE 3341041**

(43) Veröffentlichungstag der Anmeldung: **22.05.85**
**Patentblatt 85/21**

(84) Benannte Vertragsstaaten: **AT BE CH DE FR GB IT LI NL SE**

(71) Anmelder: **Maschinenfabrik Bermatingen GmbH & Co.,**
**Kesselbachstrasse 4, D-7775 Bermatingen (DE)**

(72) Erfinder: **Fleck, Alfons, Kesselbachstrasse 6,**
**D-7775 Bermatingen (DE)**

(74) Vertreter: **Engelhardt, Guido, Dipl.-Ing.,**
**Montafonstrasse 35 Postfach 1350,**
**D-7990 Friedrichshafen 1 (DE)**

(54) **Landwirtschaftliche Bodenbearbeitungsmaschine.**

(57) Bei einer landwirtschaftlichen Bodenbearbeitungsmaschine (51) mit rotierend angetriebenen Werkzeugträgern (55, 56) weisen diese in ihrem Arbeitsbereich in Förderrichtung jeweils grösser bemessene Durchmesser auf. Verstopfungen im Gehäuse (54, 54') sind somit, da das Aufnahmevolumen von Werkzeugträger zu Werkzeugträger vergrössert ist, zuverlässig vermieden.

EP 0 141 974 A2

— 1 —

Maschinenfabrik Bermatingen
GmbH & Co.

7775 Bermatingen

Landwirtschaftliche Bodenbearbeitungsmaschine

Die Erfindung bezieht sich auf eine landwirtschaftliche Bodenbearbeitungsmaschine mit zwei oder mehreren um vertikal gerichtete Achsen rotierend antreibbare Werkzeugträger, die in einem verfahrbaren Tragrahmen gehalten und von einem mit einer Auswurföffnung versehenen Gehäuse umgeben sind.

Bei den bekannten Maschinen dieser Art sind die mit unterschiedlichen Bodenbearbeitungswerkzeugen bestückten Werkzeugträger in ihrem Durchmesser jeweils gleich groß bemessen. Das von den Werkzeugen eines Werkzeugträgers abgemähte Gut wird hierbei von dem benachbarten Werkzeugträger übernommen und zusammen mit dem von dessen Werkzeugen abgemähten Gut weitergefördert. Bei einer mit mehreren Werkzeugträgern bestückten Maschine kann dies, da die zu transportierende Menge des Mähgutes mitunter erheblich ist, zu Verstopfungen in dem Maschinengehäuse und infolge davon

./.

zu Beschädigungen an den Maschinenteilen führen. Auch wird durch die große Mähgutmenge die Funktion der Mähwerkzeuge beeinträchtigt und die Mähmesser müssen mit einer hohen Umfangsgeschwindigkeit angetrieben werden. Vor allem aber ist von Nachteil,daß mit derartigen verschwenkbar gelagerten Geräten aufgrund der relativ großen Durchmesser der Werkzeugträger keine oder nur eine unzureichende Bearbeitung zwischen Bäumen, Rebstöcken oder ähnlichen Hindernissen möglich ist. Die Werkzeuge können nämlich nicht nahe genug an diese herangebracht bzw. aufgrund ihres großen Durchmessers nicht zwischen diese eingefahren werden, so daß meist ein größerer Bereich unbearbeitet bleibt. Auch weisen die Schwenkarme, bedingt durch diese Ausgestaltung, ein relativ hohes über deren Anlenkung abzustützendes Gewicht auf.

Aufgabe der Erfindung ist es daher, eine landwirtschaftliche Bodenbearbeitungsmaschine der vorgenannten Gattung zu schaffen, bei der es nicht nur ausgeschlossen ist, daß das Maschinengehäuse durch das Mähgut verstopft und somit deren Funktion beeinträchtigt wird, sondern mittels der es vielmehr möglich ist, auch bei verschwenkbarer Lagerung den Bodenbereich zwischen Bäumen und dgl. ohne weiteres zufriedenstellend zu bearbeiten. Die Bodenbearbeitungswerkzeuge sollen hierbei nahe an einen Baumstamm herangeführt werden können, so daß z. B. beim Mähen keine Grasbüschel stehenbleiben. Des weiteren soll das Gewicht des Schwenkarmes und die erforderliche Schnittgeschwindigkeit der Bodenbearbeitungswerkzeuge reduziert werden. Auch soll ohne Schwierigkeiten eine Anpassung an den jeweiligen Einsatzzweck leicht möglich sein.

./.

Gemäß der Erfindung wird dies dadurch erreicht, daß die unmittelbar mit Bodenbearbeitungswerkzeugen in Form von Mäh- oder Schlagmessern, Federzinken, Kratzstiften, Bürsten, einem Stahlband oder dgl. bestückten oder diese mittels eines Zwischengliedes tragenden scheibenförmig ausgebildeten Werkzeugträger in ihrem Arbeitsbereich in Förderrichtung abgestuft jeweils größer bemessene Durchmesser aufweisen.

Zweckmäßig ist es hierbei, die Werkzeugträger trieblich vorzugsweise mittels eines Kettentriebes miteinander zu verbinden, wobei es angezeigt ist, die im Durchmesser unterschiedlich bemessenen Werkzeugträger mit jeweils gleicher Umfangsgeschwindigkeit anzutreiben. Mit Hilfe der den einzelnen Werkzeugträgern zugeordneten Antriebsmittel ist dies ohne weiteres zu bewerkstelligen.

Angebracht ist es ferner, den Tragrahmen ganz oder teilweise als rückstellbaren Schwenkarm auszubilden und an der Frontseite oder der Heckseite eines Fahrzeuges oder in dessen Mittenbereich nach außen ein- oder beidseitig verschwenkbar unmittelbar oder mittels Zwischengliedern an diesem anzubringen. Hierbei kann der Schwenkarm fluchtend zur Rotationsachse des inneren Werkzeugträgers verschwenkbar gelagert werden und dieser kann den kleinsten oder den größten Durchmesser der an dem Schwenkarm vorgesehenen Werkzeugträger aufweisen.

Sehr vorteilhaft ist es auch, den Schwenkarm in einem nach Art eines Rasenmähers ausgebildeten Fahrgestell einzusetzen, das einen mit dem inneren Werkzeugräger kuppelbaren Antriebsmotor trägt.

./.

Nach einer andersartigen Ausgestaltung kann der Schwenkarm auch um eine gegenüber der Rotationsachse des inneren Werkzeugträgers vorzugsweise um dessen halben Durchmesser versetzt angeordnete Achse verschwenkbar gehalten werden.

Die Werkzeugträger können des weiteren als mit den nach unten abstehenden Werkzeugen bestückte in Umfangsrichtung und/oder in Richtung der Rotationsachse ganz oder teilweise elastisch verformbare Scheiben ausgebildet werden, so daß diese z. B. im Mähbereich liegenden Steinen ausweichen können, ohne daß Beschädigungen auftreten.

Ferner ist es möglich, die Werkzeugträger mittels eines um diese geführten Tragelementes in Form eines Bandes, einer Kette oder dgl. als Zwischenglied miteinander zu verbinden, an dem die als Mäh- oder Schlagmesser, Federzinken, Kratzstifte, Bürsten oder dgl. ausgebildeten Bodenbearbeitungswerkzeuge angebracht sind.

Sehr zweckmäßig ist es, die Auswurföffnung des Gehäuses an der dem Werkzeugträger kleinsten Durchmessers zugeordneten Seite vorzusehen, wobei es angebracht ist, das Gehäuse mit einem etwa parallel zu dessen Längsachse verlaufenden in die Auswurföffnung mündenden Auswurfschacht auszustatten, der durch eine in das Gehäuse eingesetzte den Werkzeugträger kleinsten Durchmessers teilweise umgebenden Zwischenwand gebildet sein kann. Durch diese Ausgestaltung ist eine exakte Ablage bzw. ein gezielter Auswurf des Mähgutes zu erzielen.

Nach einer andersartigen Ausgestaltung ist es aber auch möglich, die Auswurföffnung an einer Längsseite des Gehäuses etwa mittig zwischen zwei Werkzeugträger vorzusehen, wobei diese tangential zu einem der Werkzeugträger, vorzugsweise tangential zu dem Werkzeugträger größeren Durchmessers angeordnet und mit einem sich vorzugsweise konisch erweiterenden Auswurfschacht ausgestattet sein kann. Auch bei dieser Ausführungsform ist ein störungsfreier Abtransport des gemähten Gutes gewährleistet.

Der Tragrahmen und/oder der Schwenkarm sollen des weiteren mit einem sich am Boden abstützenden vorzugsweise seitlich angebrachten Gleitteller, einer Gleitkufe od.dgl. versehen sein, auch kann einer der Werkzeugträger, vorzugsweise der innere Werkzeugträger eines Schwenkarmes über eine biegsame Welle oder eine in Achsrichtung verstellbare Keilwelle angetrieben werden.

Der Stufensprung zwischen zwei unmittelbar benachbarter Werkzeugträger kann etwa 1 : 1,1 bis 1 : 4 betragen, so daß auch zwischen sehr eng stehenden Stöcken, da der äußere Werkzeugträger sehr klein bemessen werden kann, eine Bearbeitung möglich ist.

Die gemäß der Erfindung ausgebildete landwirtschaftliche Bodenbearbeitungsmaschine ist nicht nur sehr einfach in der konstruktiven Ausgestaltung und damit auf wirtschaftliche Weise herstellbar, sondern auch betriebssicher und vielseitig einsetzbar. Werden nämlich die Werkzeugträger in ihrer Förderrichtung im Durchmesser jeweils größer bemessen, so ist es nahezu ausgeschlossen, daß durch das von diesen geförderte Gut eine Verstopfung im Maschinengehäuse hervorgerufen wird, da sich der zur Verfügung stehende Aufnahmeraum stetig vergrößert. Dadurch bedingte Betriebsstörungen und Beschädigungen werden somit zuverlässig vermieden. Und wird der die im Durchmesser unterschiedlich bemessene Werkzeugträger haltende Tragrahmen bzw. das diese aufnehmende Gehäuse verschwenkbar gelagert, kann mit einem im Durchmesser klein zu bemessenden Werkzeugträger sehr nahe an ein Hindernis herangefahren werden, so daß z. B. der Bodenbereich zwischen Baumstämmen und Rebstöcken nahezu vollständig in kurzer Zeit zu bearbeiten ist. Eine vielseitige Anwendbarkeit, z. B. als Randstreifenmäher, als Rasenmäher, als Mulchgerät, oder als Bodenfräse ist somit bei einfacher Handhabung gegeben.

Da das Durchmesserverhältnis insbesondere bei einem mit zwei Werkzeugträgern bestückten Gerät groß gewählt werden kann, ist das Gewicht des auskragenden Schwenkarmes mitunter sehr gering. Ein Bodenbearbeitungswerkzeug mit einem kleinen Durchmesser, das mit hoher Drehzahl umlaufen kann, ermöglicht aber auch ein Einfahren in enge Zwischenräume, des weiteren ist bei großen Mengen an Schnittgut dessen Weitertransport sichergestellt, da das nachgeschaltete mit einem größeren Fördervolumen ausge-stattete Bodenbearbeitungswerkzeug dieses ohne Schwierig-keiten aufnehmen kann.

In der Zeichnung sind einige Ausführungsbeispiele der gemäß der Erfindung ausgebildeten landwirtschaftlichen Bodenbearbeitungsmaschine dargestellt, die nachfolgend im einzelnen erläutert sind. Hierbei zeigen:

Fig. 1    eine an der Frontseite eines Schleppers
         an diesen angebaute Maschine,in Draufsicht,

Fig. 2    eine als Randstreifenmäher ausgebildete
         Maschine,in Draufsicht,

Fig. 3    einen mit einem ausschwenkbaren mit zwei
         Werkzeugträgern bestückten Arm versehenen
         Rasenmäher, in Draufsicht,

Fig. 4    einen mit zwei heckseitig angebrachten
         Schwenkarmen ausgestatteten Schlepper,
         in Draufsicht,

Fig. 5    eine mit elastisch verformbaren Werkzeugträgern versehene Maschine, in Vorderansicht,

Fig. 6    die Maschine nach Fig. 5, in Draufsicht,

Fig. 7    eine mit einem über die Werkzeugträger
          geführtem mit Werkstücken bestücktem Band
          versehene Maschine, in Vorderansicht,

Fig. 8    die Maschine nach Fig. 7, in Draufsicht,

Fig. 9    die Maschine nach Fig. 7 mit einem andersartig gestalteten Gehäuse, ebenfalls in
          Draufsicht, und

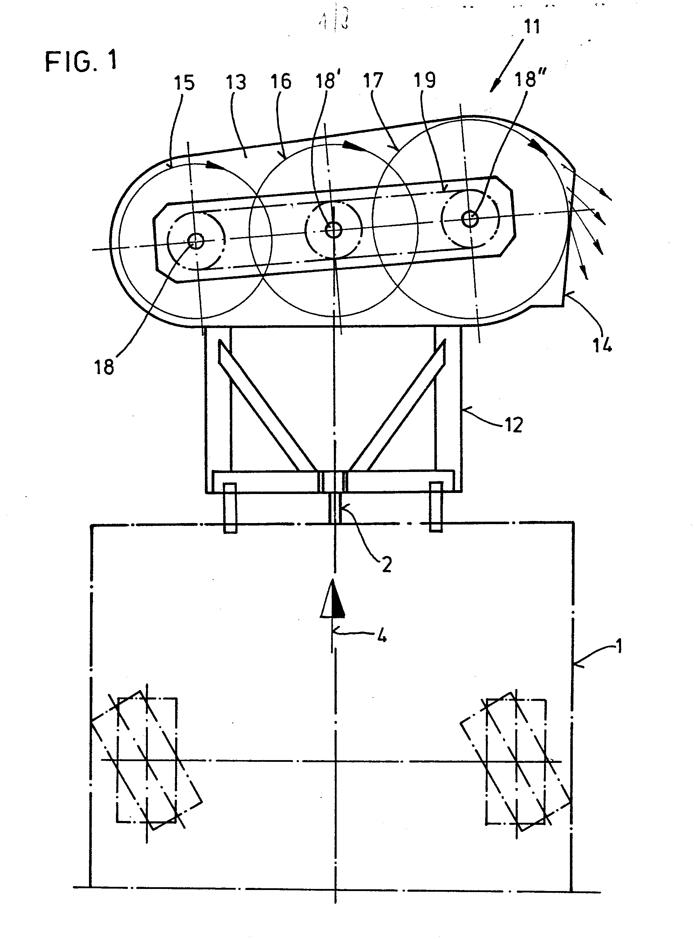

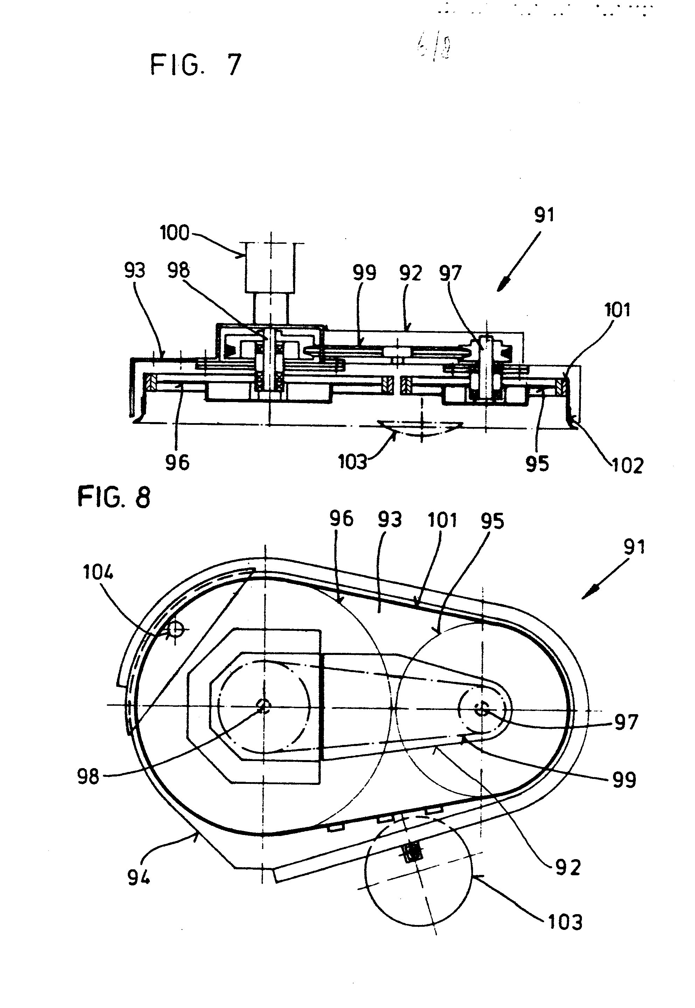

Fig. 1o   die Maschine nach Fig. 7 mit einer seitlich
          angeordneten Auswurföffnung.

Die in Fig. 1 dargestellte und mit 11 bezeichnete Bodenbearbeitungsmaschine ist frontseitig an einem in Richtung des
Pfeiles 4 verfahrbaren Schlepper 1 angebaut und besteht
aus einem Tragrahmen 12, einem mit einer Auswurföffnung 14
versehenem Gehäuse 13 sowie drei in diesem angeordneten
Werkzeugträgern 15, 16 und 17, die auf Wellen 18, 18' und
18'' drehfest gelagert und mittels eines mit der Zapfwelle
2 des Schleppers 1 verbundenen Kettentriebes 19 gemeinsam
antreibbar sind. Die scheibenförmig gestalteten Werkzeugträger 15, 16 und 17, die mit unterschiedlichen Bodenbearbeitungswerkzeugen in From von Mäh- oder Schlagmessern,
Federzinken, Kratzstiften oder Bürsten bestückt sein können,
sind in ihrem Durchmesser unterschiedlich bemessen, und zwar
weisen diese in Förderrichtung jeweils größere Durchmesser
auf, so daß das Fördervolumen des Werkzeugträgers 17 etwa
dem Fördervolumen der vorgeschalteten Werkzeugträger 15 und
16 entspricht. Auf diese Weise ist ein Verstopfen des
Gehäuses 13 auch bei einem in großer Menge anfallenden
Mähgut nahezu ausgeschlossen.

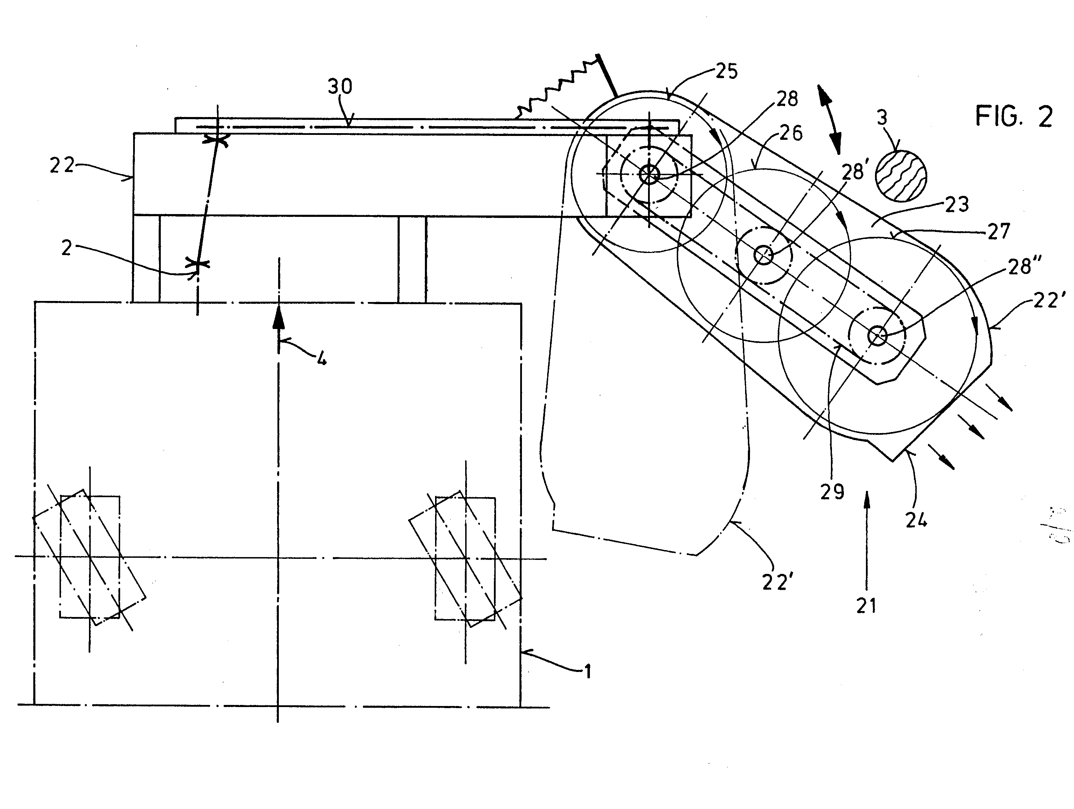

Die Bodenbearbeitungsmaschine 21 nach Fig. 2 ist als Randstreifenmäher ausgebildet, der einen verschwenkbaren Arm,
um z. B. um einen Baum 3 herummähen zu können, aufweist.

Das die Werkzeugträger 25, 26 und 27 aufnehmende mit
einer Auswurföffnung 24 ausgestattete Gehäuse 23 ist
dazu als Schwenkarm 22' ausgebildet, der an dem an dem
Schlepper 1 angebauten Tragrahmen 22 angelenkt ist. Über
einen Keilriementrieb 3o ist der den auf Wellen 28, 28'
und 28'' gehaltenen Werkzeugträgern 25, 26 und 27 zugeordnete Kettentrieb 29 mit der Zapfwelle 2 trieblich
verbunden. Aufgrund der im Durchmesser unterschiedlichen
Bemessung der Werkzeugträger 25, 26 und 27 ist auch bei
dieser Ausgestaltung ein Verstopfen des Gehäuses 23
vermieden.

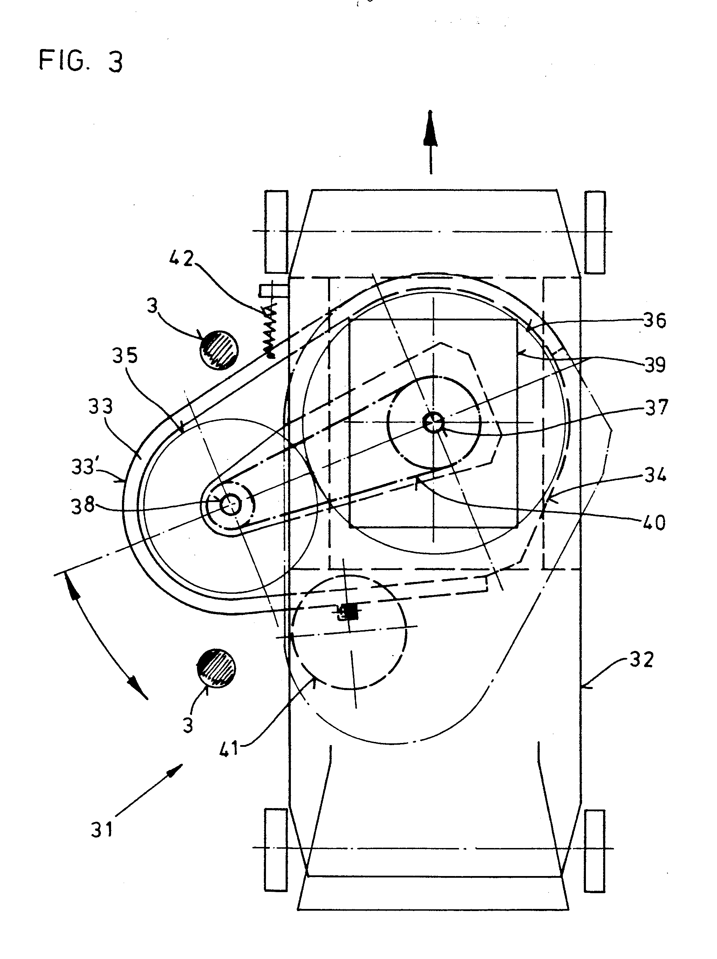

In Fig. 3 ist ein mit 31 bezeichneter Rasenmäher als
Bodenbearbeitungsmaschine dargestellt, der mit zwei im
Durchmesser unterschiedlich bemessenen Werkzeugträgern 35
und 36 versehen ist. Hierbei ist in einem Fahrgestell 32
auf einer Welle 37 ein Gehäuse 33 verschwenkbar gelagert,
das eine seitliche Auswurföffnung 34 aufweist und somit
als Schwenkarm 33' wirksam ist. Mittels eines Motors 39,
der mit der Welle 37 kuppelbar ist, sind die über einen
Kettentrieb 4o zwangläufig verbundenen auf den Wellen 37
und 38 angeordneten Werkzeugträgern 35 und 36 antreibbar.
Außerdem ist zur Abstützung des Schwenkbarmes 33', der
durch eine Zugfeder 42 nach außen gezogen wird, ein Gleitteller 41 vorgesehen.

Durch die verschwenkbare Anrodnung des Werkzeugträgers 36
kann somit das Gras auch zwischen den Bäumen 3 und im
unmittelbaren Bereich eines Baumstammes sauber abgemäht
werden, vor allem aber ist eine große Arbeitsbreite, da der Werkzeugträger 35 auf einer Seite über das Fahrgestell 32 hinausgeschwenkt werden kann, gegeben.

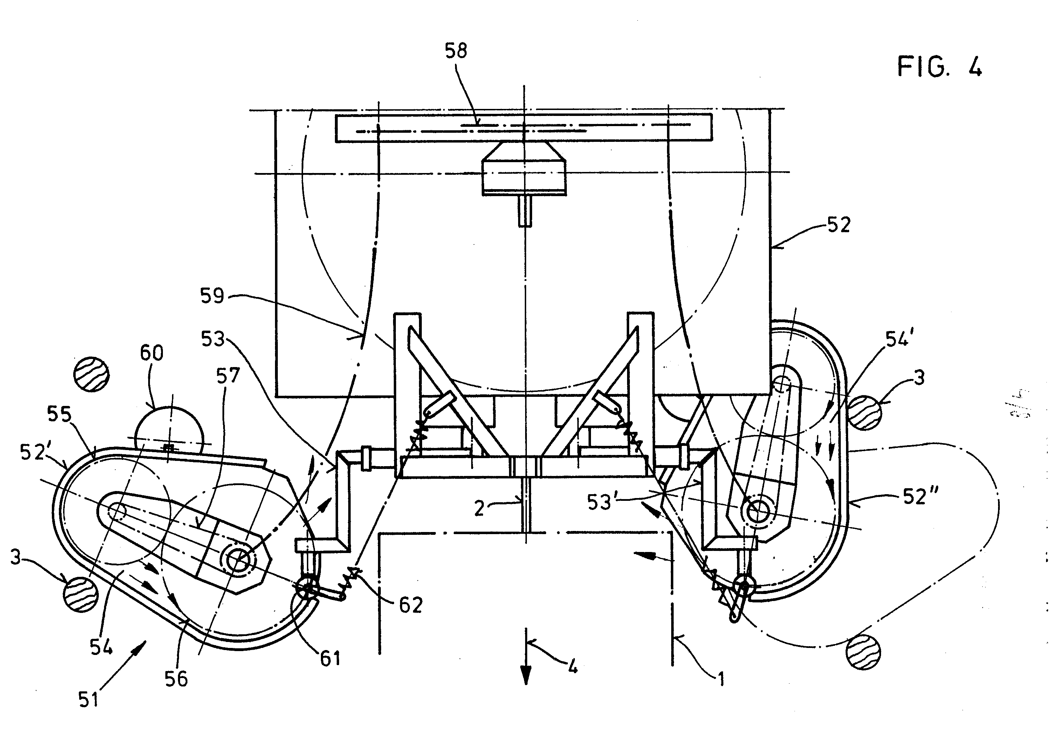

Die in Fig. 4 gezeigte Bodenbearbeitungsmaschine 51 ist als Mulchgerät für den Wein- und Obstbau ausgebildet und besteht ebenfalls aus einem an dem Schlepper 1 angebauten Traggestell 52, an dem beidseitig jeweils mittels eines Tragarmes 53 und 53' verschwenkbar gelagerte Gehäuse 54 und 54' zur Aufnahme von im Durchmesser unterschiedlich bemessenen Werkzeugträgern 55 und 56 angebracht sind. Die Gehäuse 54 und 54' bilden somit Schwenkarme 52' und 52'', die nahe an Bäume 3 herangefahren und aufgrund des kleinen Durchmessers der Werkzeugträger 55 auch zwischen diese eingeschwenkt werden können. Das Ausschwenken der um Anlenkbolzen 61 verschwenkbaren mittels Gleittellern 60 am Boden abgestützten Gehäuse 54 und 54' wird mittels Zugfedern 62 bewerkstelligt.

Auch bei diesem Ausführungsbeispiel sind die Werkzeugträger 55 und 56 mittels eines Kettentriebes 57 miteinander verbunden. Zur trieblichen Koppelung mit der Zapfwelle 2 des Schleppers 1 dient aber eine biegsame Welle 59 als Verbindungsglied zwischen einem Keilriementrieb 58 und dem Kettentrieb 57. Auf diese Weise ist es möglich, die Gehäuse 54 und 54' um die exzentrisch zu den Werkzeugträgern 56 angeordneten Anlenkbolzen 61 zu verschwenken, so daß ein großer Schwenkbereich gegeben ist.

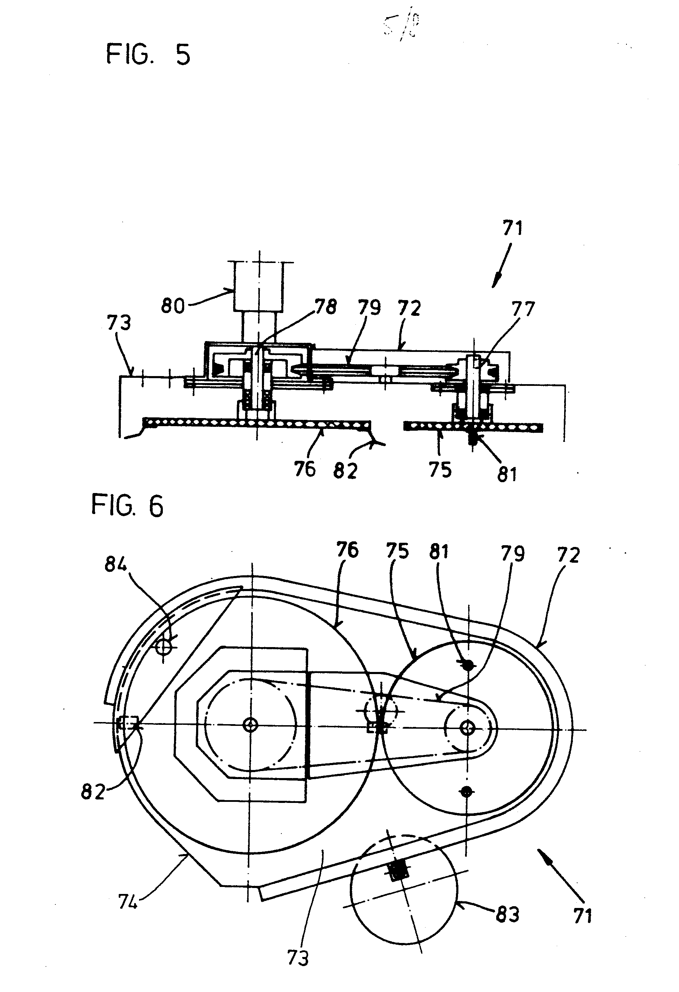

Die Bodenbearbeitungsmaschine 71 nach den Fig. 5 und 6 weist zwei in einem Tragrahmen 72 gehaltene und in einem mit einer Auswurföffnung 74 ausgestatteten Gehäuse 73 angeordnete Werkzeugträger 75 und 76 auf, an denen nach unten abstehende Werkzeuge 81 bzw. 82 in Form von Kratzstiften angebracht sind. Die auf Wellen 77 und 78 gehaltenen

- 11 -

und durch einen Kettentrieb 79 trieblich miteinander verbundenen Werkzeugträger 75 und 76 sind hierbei aus elastisch verformbarem Material hergestellt, so daß die Werkzeuge 81 bzw. 82 beim Aufschlagen auf Hindernisse ausweichen können, ohne daß dadurch Beschädigungen auftreten. Mittels eines Gleittellers 83 ist die mit einer Anlenkbohrung 84 versehene Maschine 71, deren Werkzeugträger 75 mit einer Antriebswelle 80 verbindbar ist, am Boden abgestützt.

Bei der Bodenbearbeitungsmaschine 91 nach den Fig. 7 und 8 sind die Bodenbearbeitungswerkzeuge 102 an einem Band 101 angebracht, das um die in einem mit einer Auswurföffnung 94 versehenen Gehäuse 93 eingesetzten und in einem Tragrahmen 92 gehaltenen Werkzeugträger 95 und 96 geführt ist. Auf diese Weise ist ein Bandmäher geschaffen. Zum Antrieb dient wiederum eine Antriebswelle 100, auch sind die auf Wellen 97 und 98 angeordneten im Durchmesser unterschiedlich bemessenen Werkzeugträger 95 und 96 mittels eines Kettentriebes 99 zwangläufig miteinander verbunden. Zur Befestigung der als Schwenkarme ausgebildeten, mittels eines Gleittellers 103 am Boden abgestützen Maschine 91 ist in dem Gehäuse 93 eine Anlenkbohrung 104 vorgesehen.

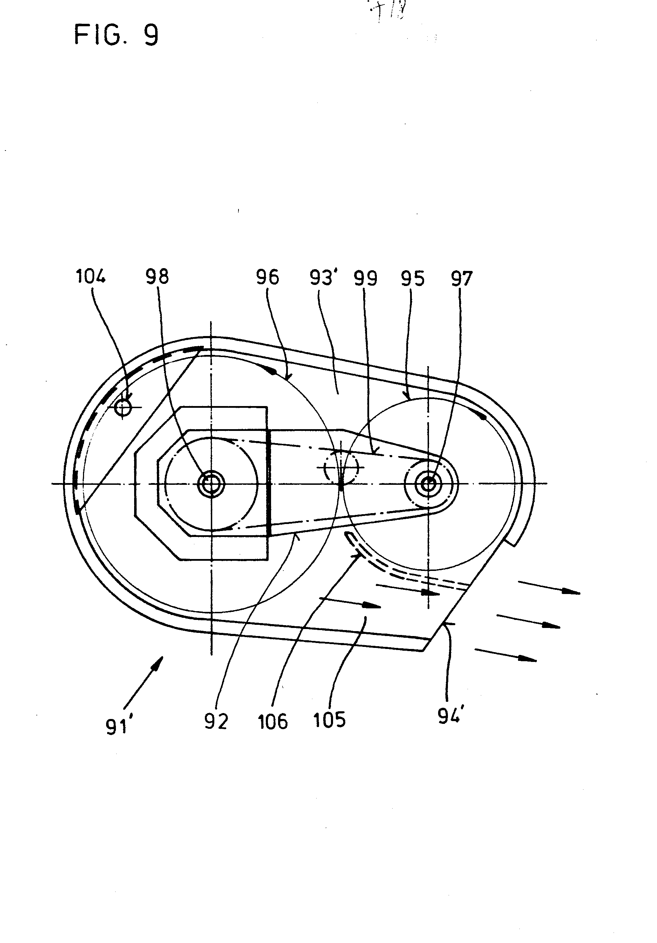

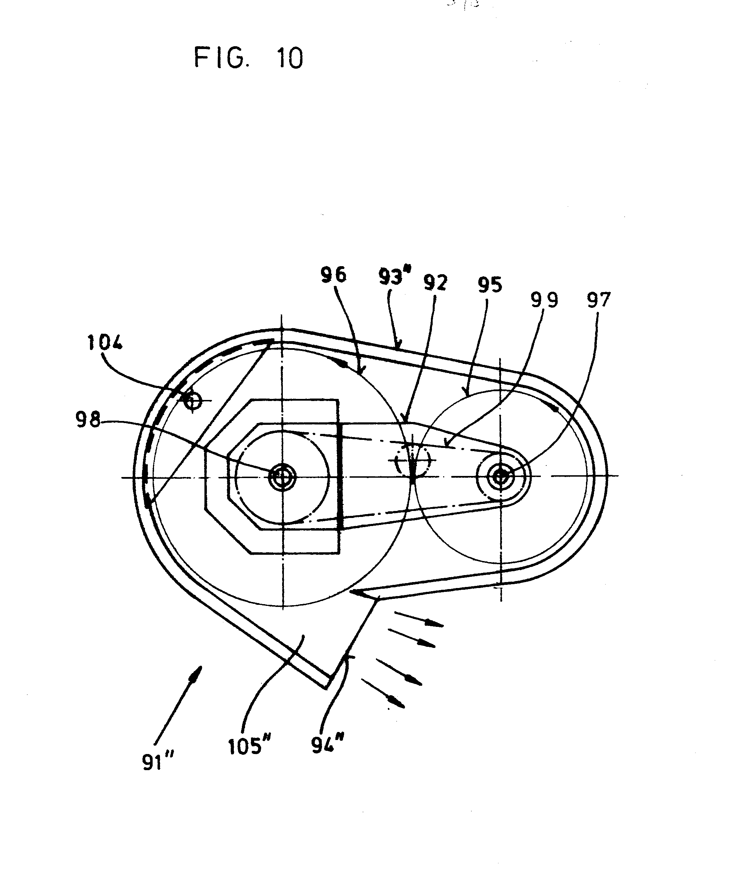

Die in den Fig. 9 und 10 dargestellten Bodenbearbeitungsmaschinen 91' und 91'', die in gleicher Weise wie die Maschine nach den Fig. 7 und 8, jedoch mit unmittelbar an den Werkzeugträgern 95 und 96 angebrachten Bodenbearbeitungswerkzeugen ausgestattet sind, sind die Auswurföffnungen 94' und 94'' unterschiedlich angeordnet. Bei der Ausführungsform nach Fig. 9 ist der Auswurföffnung 94', die auf der dem Werkzeugträger 95 mit den kleinsten Durchmesser zugeordneten Seite vorgesehen ist, ein Auswurfschacht 105 zugeordnet, der durch eine in das Gehäuse 93' eingesetzte Zwischenwand 106 gebildet ist. Auf diese Weise ist eine äußerst exakte Ablage des gemähten Gutes z.B. als Schwad möglich.

./.

Gemäß Fig. 1o ist die Auswurföffnung 94'' an einer Längsseite des Gehäuses 93'' etwa mittig zwischen den beiden
Werkzeugträgern 95 und 96 vorgesehen. Außerdem verläuft
die Auswurföffnung 94'' tangential zu dem Werkzeugträger
96 und weist einen sich konisch erweiternden Auswurfschacht 1o5'' auf. Ein störungsfreier Abtransport des
gemähten Gutes ist dadurch sichersgestellt.

A 9o7 e-l-s
9. November 1983

— 1 —

Maschinenfabrik Bermatingen
GmbH & Co.

7775 Bermatingen

P a t e n t a n s p r ü c h e :

1. Landwirtschaftliche Bodenbearbeitungsmaschine mit zwei oder mehreren um vertikal gerichtete Achsen rotierend antreibbare Werkzeugträger, die in einem verfahrbaren Tragrahmen gehalten und von einem mit einer Auswurföffnung versehenen Gehäuse umgeben sind,

d a d u r c h   g e k e n n z e i c h n e t ,

daß die unmittelbar mit Bodenbearbeitungswerkzeugen (81, 82; 1o2) in Form von Mäh- oder Schlagmessern, Federzinken, Kratzstiften, Bürsten, einem Stahlband oder dgl. bestückten oder diese mittels eines Zwischengliedes (Band 1o1) tragenden scheibenförmig ausgebildeten Werkzeugträger (15, 16, 17; 25, 26, 27; 35, 36; 55, 56; 75, 76; 95, 96) in ihrem Arbeitsbereich in Förderrichtung abgestuft jeweils größer bemessene Durchmesser aufweisen.

./.

2. Landwirtschaftliche Bodenbearbeitungsmaschine
nach Anspruch 1,

d a d u r c h   g e k e n n z e i c h n e t ,

daß die Werkzeugträger (15, 16, 17; 25, 26, 27; 35,
36; 55, 56; 75, 76; 95, 96) trieblich vorzugsweise
mittels eines Kettentriebes (19; 29; 4o; 57; 79; 99) od.dgl.
miteinander verbunden sind.

3. Landwirtschaftliche Bodenbearbeitungsmaschine
nach Anspruch 2,

d a d u r c h   g e k e n n z e i c h n e t ,

daß die im Durchmesser unterschiedlich bemessenen
Werkzeugträger (15, 16, 17; 25, 26, 27; 35, 36; 55, 56;
75, 76; 95, 96) mit jeweils gleicher Umfangsgeschwindig -
keit antreibbar sind.

4. Landwirtschaftliche Bodenbearbeitungsmaschine
nach einem oder mehreren der Ansprüche 1 bis 3,

d a d u r c h   g e k e n n z e i c h n e t ,

daß der Tragrahmen (22; 33; 52; 72; 92) ganz oder teilweise als rückstellbarer Schwenkarm (22'; 33'; 52', 52'')
ausgebildet und an der Frontseite oder der Heckseite
eines Fahrzeuges (1; 32) oder in dessen Mittenbereich
nach außen ein- oder beidseitig verschwenkbar unmittelbar
oder mittels Zwischengliedern an diesem angebracht ist.

./.

5. Landwirtschaftliche Bodenbearbeitungsmaschine
nach Anspruch 4,

d a d u r c h   g e k e n n z e i c h n e t ,

daß der Schwenkarm (22'; 33') fluchtend zur Rotationsachse des inneren Werkzeugträgers (25; 36) verschwenkbar gelagert ist und daß dieser den kleinsten oder den
größten Durchmesser der an dem Schwenkarm (22'; 33')
vorgesehenen Werkzeugträger (25, 26, 27 bzw. 35, 36)
aufweist.

6. Landwirtschaftliche Bodenbearbeitungsmaschine
nach Anspruch 4 oder 5,

d a d u r c h   g e k e n n z e i c h n e t ,

daß der Schwenkarm (33') in einem nach Art eines Rasenmähers (31) ausgebildeten Fahrgestell (32) eingesetzt
ist, das einen mit dem inneren Werkzeugträger (36)
kuppelbaren Antriebsmotor (39) trägt.

7. Landwirtschaftliche Bodenbearbeitungsmaschine
nach einem oder mehreren der Ansprüche 1 bis 4,

d a d u r c h   g e k e n n z e i c h n e t ,

daß der Schwenkarm (52',52'') um eine gegenüber der
Rotationsachse des inneren Werkzeugträgers (56) vorzugsweise um dessen halben Durchmesser versetzt angeordnete Achse (61) verschwenkbar gehalten ist.

.⁄.

- 4 -

8. Landwirtschaftliche Bodenbearbeitungsmaschine
nach einem oder mehreren der Ansprüche 1 bis 7,

d a d u r c h   g e k e n n z e i c h n e t ,

daß die Werkzeugträger (75, 76) als mit den nach unten
abstehenden Werkzeugen (81, 82) bestückte in Umfangsrichtung und/oder in Richtung der Rotationsachse ganz
oder teilweise elastisch verformbare Scheiben ausgebildet sind.

9. Landwirtschaftliche Bodenbearbeitungsmaschine
nach einem oder mehreren der Ansprüche 1 bis 8,

d a d u r c h   g e k e n n z e i c h n e t ,

daß die Werkzeugträger (95, 96) mittels eines um diese
geführten Tragelementes in Form eines Bandes (1o1),
einer Kette oder dgl. als Zwischenglied miteinander
verbunden sind, an dem die als Mäh- oder Schlagmesser,
Federzinken, Kratzstifte, Bürsten oder dgl. ausgebildeten Bodenbearbeitungswerkzeuge (1o2) angebracht sind.

1o. Landwirtschaftliche Bodenbearbeitungsmaschine
nach einem oder mehreren der Ansprüche 1 bis 9,

d a d u r c h   g e k e n n z e i c h n e t ,

daß die Auswurföffnung (94') des Gehäuses (93') an der
dem Werkzeugträger (95) kleinsten Durchmessers zugeordneten Seite vorgesehen ist.

./.

11. Landwirtschaftliche Bodenbearbeitungsmaschine nach Anspruch 1o,

d a d u r c h   g e k e n n z e i c h n e t ,

daß das Gehäuse (93') mit einem etwa parallel zu dessen Längsachse verlaufenden in die Auswurföffnung (94') mündenden Auswurfschacht (1o5) versehen ist.

12. Landwirtschaftliche Bodenbearbeitungsmaschine nach Anspruch 1o,

d a d u r c h   g e k e n n z e i c h n e t ,

daß der Auswurfschacht (1o5) durch eine in das Gehäuse (93') eingesetzte den Werkzeugträger (95) kleinsten Durchmessers teilweise umgebende Zwischenwand (1o6) gebildet ist.

13. Landwirtschaftliche Bodenbearbeitungsmaschine nach einem oder mehreren der Ansprüche 1 bis 9,

d a d u r c h   g e k e n n z e i c h n e t ,

daß die Auswurföffnung (94'') an einer Längsseite des Gehäuse (93'') etwa mittig zwischen zwei Werkzeugträgern (95,96) vorgesehen ist.

14. Landwirtschaftliche Bodenbearbeitungsmaschine nach Anspruch 13,

d a d u r c h   g e k e n n z e i c h n e t ,

daß die Auswurföffnung (94'') tangential zu einem der Werkzeugträger (96), vorzugsweise tangential zu dem Werkzeugträger größeren Durchmessers angeordnet ist.

0141974

- 6 -

15. Landwirtschaftliche Bodenbearbeitungsmaschine
nach Anspruch 13 oder 14,

d a d u r c h   g e k e n n z e i c h n e t ,

daß die Auswurföffnung (94'') mit einem sich vorzugsweise konisch erweiternden Auswurfschacht (1o5'')
versehen ist.

16. Landwirtschaftliche Bodenbearbeitungsmaschine
nach einem oder mehreren der Ansprüche 1 bis 15,

d a d u r c h   g e k e n n z e i c h n e t ,

daß der Tragrahmen (52', 52'', 72; 92) und/oder der
Schwenkarm (33') mit einem sich am Boden abstützenden
vorzugsweise seitlich angebrachten Gleitteller (41; 6o;
83; 1o3), einer Gleitkante od.dgl. versehen ist.

17. Landwirtschaftliche Bodenbearbeitungsmaschine
nach einem oder mehreren der Ansprüche 1 bis 16,

d a d u r c h   g e k e n n z e i c h n e t ,

daß einer der Werkzeugträger (56), vorzugsweise der
innere Werkzeugträger eines Schwenkarmes (52') über
eine biegsame Welle (59) oder eine in Achsrichtung verstellbare Keilwelle antreibbar ist.

18. Landwirtschaftliche Bodenbearbeitungsmaschine
nach einem oder mehreren der Ansprüche 1 bis 17,

d a d u r c h   g e k e n n z e i c h n e t ,

daß der Stufensprung zwischen zwei unmittelbar benachbarten Werkzeugträgern (15, 16, 17; 25, 26, 27; 35, 36;
55, 56; 75, 76; 95, 96) etwa 1 : 1,1 bis 1 : 4 beträgt.

FIG. 1

FIG. 2

FIG. 3

FIG. 4

FIG. 5

FIG. 6

FIG. 7

0141974

4/8

FIG. 8

0141974

7/9

FIG. 9

104   98   96   93'   99   95   97

91'   92   106   105   94'

FIG. 10